# EUROPEAN PATENT APPLICATION

(11) **EP 1 992 844 A1**
(43) Date of publication of application: **19.11.2008**
(21) Application number: 07701592.3
(22) Date of filing: 22.02.2007
(51) Int. Cl.: F16H 48/20, B60K 17/34

(54) **TORSIONAL CONTROL FOR TORQUE DISTRIBUTION**

(30) Priority: 24.02.2006 BG 10945406
(71) Applicant: Ganchev, Stiliyan Tsonev, 9027 Varna (BG)
(72) Inventor: Ganchev, Stiliyan Tsonev, 9027 Varna (BG)
(74) Representative: Neykov, Neyko Hristov
(86) International application number: PCT/BG2007/000003
(87) International publication number: WO 2007/095701

(57) **Abstract**

The invention proposes technical means for use of torsion reactions under torsional loadings of driving shafts in the control of all vehicles devices, which are functionally related to the interaction "wheels - road". The driving torque to permanently connected driving wheels is transferred through an unit for formation of relative mobility (3). The unit detects changes in the cohesion of the permanently connected driving wheels with the road depending on the deformation of its sensitive to torsional loadings elastic elements (4). The unit (3) actuates a unit for conversion of the relative mobility into physical control actions (5). The unit (5) acts upon devices for control of torque distribution directly or by means of driving lines, which can be adjusted.

## Description

### TECHNICAL FIELD OF THE INVENTION

The invention relates to torsion control of driving torque distribution applicable in mechanical engineering, and particularly in the vehicle manufacturing industry, as well as wherever there is a need for automatic control of torque in functionally connected objects.

### BACKGROUND OF THE INVENTION

A large number of torque distributors for use in vehicles operate with one permanently connected driving axle. In the cases of loss of cohesion between the road and the wheels on that axle, the distributors engage automatically driving axles, which are not permanently connected. Generally, the engages are carried out by means of multidisk clutches in an oil bath. The engaging/disengaging of the clutches is most often carried out by hydraulic or electromagnetic actuators with externally fed energy, and the instructions are generated by electronic control equipment. The distribution of engine torque on the driving wheels is also controlled by operation on the mechanisms and systems of the vehicle, which are functionally related to the interaction "wheels - road".

The efficiency of the control depends mostly on how quickly the system works. To achieve a high level of road safety and cost-effectiveness of the motion, there is also a need for precise dispensing of control actions. The preciseness of the dispensing strongly depends on the accuracy of determining the loss of cohesion. Important is also the number of motion parameters which are taken under consideration in such control (speed, engine mode, turning, accelerations). In electronic control, the losses of cohesion are generally registered indirectly by ABS sensors through registration of skidding of the driving wheels. An evaluation of the cohesion values lacks. The registration is carried out when there already are energy losses and consequences which adversely affect the motion stability. The registration of cohesion values is substituted for registration of the consequences of cohesion loss. Thus the start of giving distribution control instructions is delayed. When the cohesion losses are registered by means of torque sensors fitted after the transmission mechanism (JP 63013824), there is no such delay as described above, but here also lacks a sufficiently accurate quantitative assessment of losses.

The control action, as a result of a control instruction, occurs upon operating (changing the active status) of the actuator. The control actions are further delayed by the time necessary for operating of the actuators after giving control instructions to them.

The distribution control process in torque distributors with electronic control includes the following stages: registration of cohesion losses, generation and transmission of control instructions to actuators, operation of actuators.

In control by means of sensors, there exists a direct correlation between the degree of satisfying the distribution requirements and the degree of design complexity, which accompany that design.

A major disadvantage of all electronically controlled torque distributors is the delay of control actions towards the moments of arising necessity of them. The reason for this disadvantage is the indirect registration of cohesion losses, as well as the resulting thereof separation and consecutive fulfilment of the stages of the distribution control process.

### SUMMARY OF THE INVENTION

The purpose of this invention is to create torsion control of driving torque distribution, with which the changes in the cohesion between the road and wheels on permanently connected driving axles are directly registered through devices including elastic elements sensitive to torsional loadings, and the mechanical transfers in these devices are converted into physical control actions that can be applied in doses.

The purpose is achieved by means of torsion control of driving torque distribution which includes driving shafts with their driving components, differential and interlocking mechanisms of permanently and non-permanently connected driving axles, axle clutches with their engaging devices operating non-permanently connected driving axles as well as actuators for controlling the operation of mechanisms and systems of the object of application of the invention, which are functionally related to the interaction "wheels - road".

In a shaft, which is mechanically connected to a permanently connected driving axle, at least one unit is integrated for formation of relative mobility, which through its sensitive to torsion loadings elastic elements detaches over the shaft length at least two relatively mobile parts. By means of these parts a unit for conversion of the relative mobility into physical control actions is formed.

The unit for conversion of the relative mobility into physical control actions contains a hollow rotative-shaped component, which is attached to one of the relatively mobile part of the unit for formation of relative mobility, and is located coaxially to the other one. Cammed profiles are cut into the rotative-shaped component. These profiles are interacting with round ends of stems protruding from a disk, which is attached to the shaft, by a splined joint. By means of a second sliding kinematic unit the disk is also connected to one end of a control lever, which is suspended by its middle part on an axis of swing, which axis is firmly fixed to the chassis. The opposite to the disk end of the lever is connected to actuators used for controlling the operation of mechanisms and systems of the object of application, which are functionally related to the interaction "wheels - road".

The control lever is connected by means of a drive line of a clutch with an engaging device of at least one axle clutch of a non-permanently connected driving axle, and along the drive line of a clutch a device for dispensing the physical control actions is installed.

The control lever is connected by means of a drive line of a brake with a control unit of the braking system, and along the drive line of a brake a device for dispensing the braking actions is installed.

The invention provides for control actions on actuating units performing control of engine torque distribution, which actions are manifested at the time of occurrence of their causes. The so improved control efficiency ensures increase of the road safety of vehicles in bad and sharply changing road conditions and improvement of their fuel efficiency. The invention provides simple technical means for forming and applying torsion reactions under torsion loadings of shafts. These reactions contain torsion information which accurately, directly and continuously reflects the adhesive forces values and of the useful work carried out by the transmission within the interval of values risky for road safety.

### DESCRIPTION OF FIGURES ENCLOSED

Model construction of torsion control of torque distribution is depicted by the figures enclosed, whereas:
Figure 1 is a drawing of mechanical construction of the torsion control of torque distribution.
Figure 2 is a variant of kinematic structure of a unit for formation of relative mobility.

### EXEMPLARY EMBODIMENT OF THE INVENTION

In a shaft 1, which is mechanically connected to a permanently connected driving axle 2 at least one unit for formation of relative mobility 3 is integrated, which through its sensitive to torsion loadings elastic elements 4 detaches over the shaft length at least two relatively mobile parts. By means of these parts, a unit for conversion of the relative mobility into physical control actions 5 is formed.

The unit for conversion of the relative mobility into physical control actions 5 contains a hollow rotative-shaped component 6, which is attached to one of the relatively mobile part of the unit for formation of relative mobility 3, and is located coaxially to the other one. Cammed profiles 7 are cut into the rotative-shaped component 6. These profiles are interacting with round ends of stems 8 protruding from a disk 9, which is attached to the shaft 1, by a splined joint 10. By means of a second sliding kinematic unit 11, the disk 9 is also connected to the one end of control lever 12, which is suspended by its middle part on an axis of swing 13, which axis is firmly fixed to the chassis. The opposite to the disk 9 end of the control lever 12 is connected to actuators used for controlling the operation of mechanisms and systems of the object of application, which are functionally related to the interaction "wheels - road".

The control lever 12 is connected by means of a drive line of a clutch 14 with an engaging device 15 of at least one axle clutch 16 of a non-permanently connected driving axle 17, and along the drive line of a clutch 14 a device for dispensing the physical control actions 18 is installed.

The control lever 12 is connected by means of a drive line of a brake 19 with a control unit of the braking system 20, and along the drive line of a brake 19 a device for dispensing the braking actions 21 is installed.

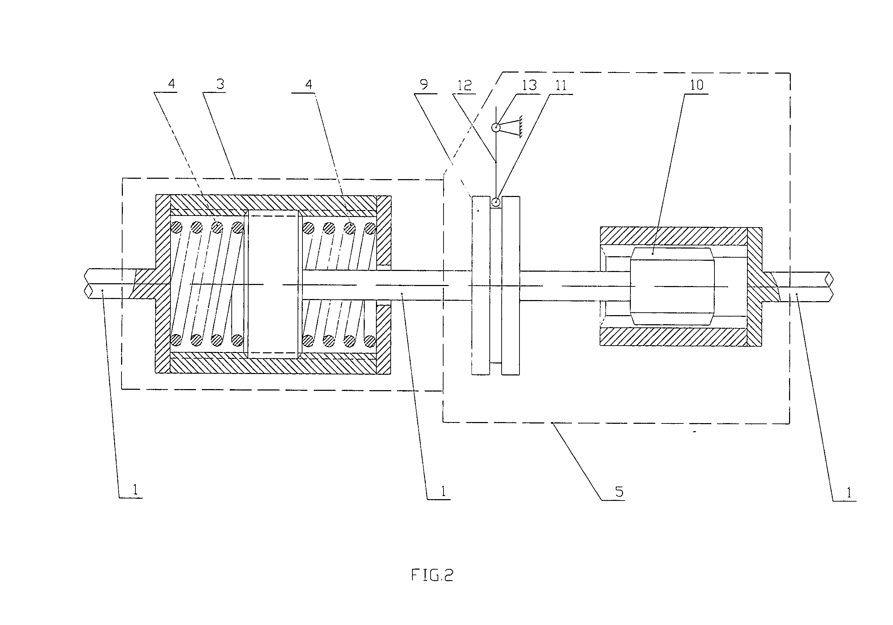

Fig. 2 shows an axial-angular reaction in operation. The relative mobility of the part of shaft 1, onto which the disk 9 is attached, is provided by screw and splined joints 10 at both ends of that part. The relative mobility part, through which the unit 5 is formed, is disk 9 here. The elastic elements 4 are helical springs each of which effects axial resistance in a certain direction of rotation. In the event that the periphery of disk 9 is made with cam profile, which extends along the shaft length in such a way that the control lever 12 follows the cam profile (by means of sliding couplings with the cam and in the chassis), then a variation of the construction is achieved, where a radial-torsional reaction is effected (through angular and axaial components).

### OPERATION OF THE DEVICE

Depending on the needs of the particular application, the unit for formation of relative mobility 3 may be constructed to form various mechanical or other kind of physical manifestations of torsion, e.g. fluid or electric. These opportunities ensue from the provided mechanical relative mobility between parts of shaft 1, as well as between parts mounted on it and the shaft itself.

The construction of unit 5 entirely depends on the type of chosen physical manifestation of torsion. The same applies to the choice of type of actuators (mechanical, hydraulic or electric), which in turn determine the type of devices for dispensing control actions 18 and 21. The unit 3 can be located on driving shafts, semi-shafts of driving axles, and on a shaft before the transmission mechanism.

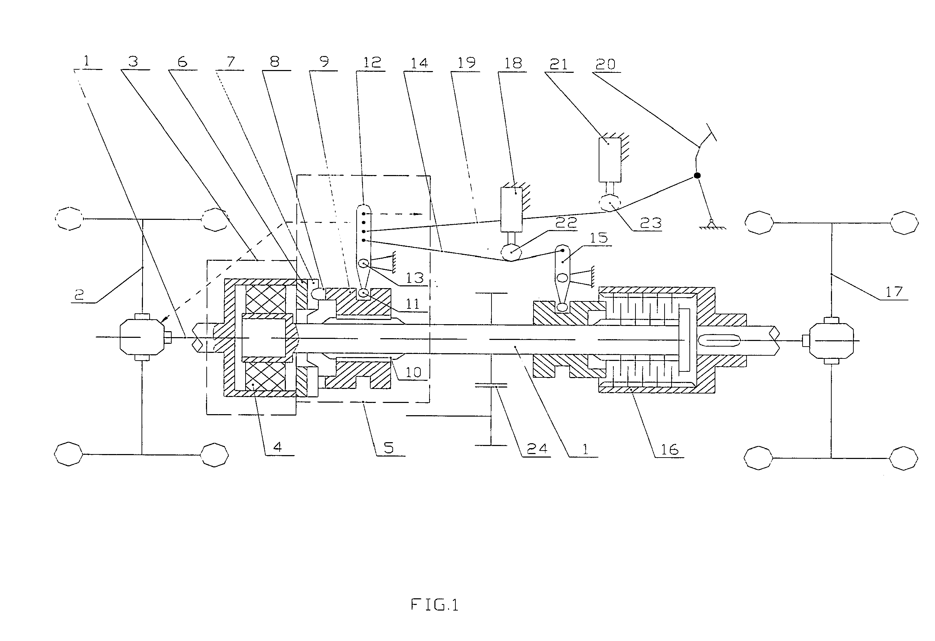

Figure 1 illustrates a variant of a pure mechanical construction of the invention with mounting of unit 3 on driving shaft 1 after the transmission mechanism. The driving component of shaft 1 (positioned after the transmission mechanism which is not depicted on these figures) in the example is gear transmission 24. The mechanical angular relative shifting of two parts of shaft 1, as a result of torsional loadings, actually is a torsional reaction of the shaft, which is formed by unit 3.

Unit 5 in the illustrated variant contains a rotative-shaped component 6 with cam profiles 7, stems 8, disk 9, and lever 12. The stems 8, continuously pressed to profiles 7, shift disk 9, together with lever 12, following the profiles during changes in the loadings. The end of the control lever 12, opposite to the disk 9, performs the physical control action on the objects controlled through drive lines 14 and 19, and the devices dispensing the control actions 18 and 21. In the case described, the physical action is mechanical, the drive lines are flexible shaft drive (of rope), and the devices 18 and 21 are designated conditionally - only by their function which, for flexible shafts drive, reduces to mechanical shift of the rollers 22 and 23.

In cases where the semi-shafts of a non-permanently connected driving axle 17 are activated by means of separate clutches 16, it is possible to distribute the torque between the wheels on that axle as well.

When torque is not exerted on unit 3 (with maximum deformation of elastic elements 4), the position of rollers 22 and 23 determine three types of drive line status. A status where the roller only keeps the rope taut is defined as "zero tension" of the drive line. In that status the roller does not exert corrective influence on the control actions. Where the roller tautens the drive line so that it engages (partially or completely) the clutch 16 or the brake 20, this status is defined as "positive tension". Through "positive tension" of drive line 14, some degree of engaging the clutch 16 is achieved, whereupon is ensured various engine torque bias ratio between the driving axles. In cases where a roller slackens a drive line, the status is defined as "negative tension". Depending on the degree of slackening, the control action can be either delayed and weakened, or interrupted.

The setting of a definite bias ratio of engine torque distribution between the driving axles through device 18 is actually determination of a given strategy of torsional distribution (control) of torque. The choice of strategy for control which for a particular type of vehicle should be adequate to particular road conditions, to ABS operation (and other safety systems), or to a driving style preferred by the driver, comes down to shifting of roller 22 of device 18. This roller shifting is commensurate to the clutch stroke.

In cam variants of mechanical constructions of the invention, the position of control lever 12 depends on the location of rods 8 on cams 7. That location is determined by the degree of deformation of elastic elements 4 of unit 3, and by the rotation direction. For each of the two rotation directions within the range from zero to maximum deformation of elastic elements 4, rods 8 slide over different gradients (halves) of cam profiles 7 between the highest and lowest point or over adjacent gradients of adjacent cams - between the highest and lowest point.

The loading of shaft 1 by engine torque deforms elastic elements 4 only when there is cohesion between the wheels on the permanently connected driving axle and the road. In case of "zero tension" of drive line 14, the zero deformation of elastic elements corresponds to fully engaged clutch 16 (fully engaged second driving axle 17), and the maximum deformation - to fully disengaged clutch (fully disengaged second driving axle). The elastic characteristics of the elastic elements (the characteristics of unit 3) is chosen so that their maximum deformation (and the full disengagement of the second driving axle) occurs upon sufficiently high for the road safety values of cohesion between the wheels on the permanently connected driving axle 2 and the road. When driving with the permanently connected driving axle only, each drop of the cohesion below the values set by the characteristics will result in immediate (and commensurate to the drop) engaging of the second driving axle 17. In case of "zero tension", engaging will also occur for each drop of the engine torque (when taking off gas) below the values upon which the elastic elements 4 deform to a maximum extent on a good-cohesion road.

Under simultaneous transmission of engine torque to both axles, and in case of zero or "positive tension" of drive line 14, the differences in distances run by the wheels, as a result of rough road or turning, will reveal as loadings over the chain road - wheels - shafts - elastic elements - axle clutch - shafts - wheels - road. The compensation of the differences and the absorption of the loadings take place in the weakest for the time being links of this chain. When the operation of the second axle is caused by decreased cohesion, these loadings could be ignorred. Similar loadings, in the case of a good-cohesion road, can be avoided through setting a slightly "negative tension" of drive line 14 by means of device 18.

Device 18 can be constructed in a large number of variants - from mechanical with manual control to a fully automatic mechanotronic device. The mechanized, automated and automatic variants need externally fed energy to carry out the shiftings. The automated and the automatic variants need also information on a number of parameters of the movement, as well as processing of this information. The technical means of such processing vary in the range from logical elements to computerization. In automatic variants the device 18 could, for instance, set a slightly "negative tension" on every occasion of a stronger reduction of the exerted engine torque.

Drive line 19 and device 21 render assistance in starting and descending a slope from the vehicles, as well as act as an automatic parking brake. For performing these functions, it is necessary with zero speed and a stepped-on brake pedal 20, "zero" or slightly "positive tension" of drive line 19 should be set by means of device 21 (manually or automatically). Thus the brake remains switched on even after release of the brake pedal 20, operates onto all wheels, and is automatically released only after exertion of engine torque onto shaft 1. When reaching a certain speed (e.g. 5 kph) drive line 19 should be loosen. If after starting, the operation of device 21 is not terminated, the brakes will activate upon each release of the accelerator. The termination of device 21 operation can be done either manually or automatically.

Depending on the chosen kinematic structure of the configuration of the elastic coupling of unit 3, there can be formed both angular and axial and radial mechanical reactions of the torsion (torsional reactions).

A pure axial reaction without an angular component in shaft 1 can be achieved if the engine torque is exerted onto shaft 1 through disk 9 (see fig. 1) by means of gear pair 24 made with inclined cogs. In that case the elastic elements 4 should be placed on both sides of disk 9, and the gear pair will also perform the function of the screw coupling on fig. 2.

In simplified variants axially-moving parts of the shaft (or mounted on it) can be directly connected to clutch engaging devices, interlocks of differentials or other means of control.

The mechanical control actions in the variant shown on fig. 1 can become fluid (e.g. hydraulic) if parts of the volumes of the rubber elastic elements are filled with the fluid and are connected by channels through the shaft, with a hydraulic clutch engaging device. Similarly, drive lines 14 and 19 can become hydraulic, and the mechanical control action can become hydraulic, if the end of lever 12 is connected to a hydraulic pressure generating device. This will necessitate changes in devices 18 and 21. If unit 3 or lever 12 controls electric contacts, an electric drive could be accomplished. By means of magnetic or photosensors which register mechanical relative shiftings formed by unit 3, torsional electronic control without a mechanical unit for conversion 5 can be realized. The advantage of this kind of electronic control is the accuracy of direct detection of torsion as a mechanical equivalent of cohesion and a measure of the useful work carried out at the moment of detection.

The torsional reactions of torsional loadings of shafts can be used as torsional information about the cohesion values (for the road condition), and about the useful work carried out by the transmission in every moment during movement. This is easy to accomplish and reasonable for the control of all mechanisms and systems of the object of invention application, which operation is related to the interaction "wheels - road". An example of such application can be the control of the interlocking mechanism to the differential of the permanently connected driving axle. On fig. 1 these opportunities are marked by dotted lines. Objects of application of the torsional information through the technical means of the invention can be an engine, transmission mechanism, braking system, etc. Apart from its high informational potential, the torsional reactions also contain an easy to employ energetic potential for immediate application (conversion) of torsional information into physical control actions.

The technical means of obtaining and applying torsional information which are subject of this invention can be used to simplify the operation and to increase the efficiency of the programmes for safety and stability of the vehicles. Information sources:
1. EP 1 650 072
2. US 5,740,877
3. JP 63013824
4. JP 2109733

## Claims

1. **Torsion** control of driving torque distribution, which includes driving shafts with their driving components, differential and interlocking mechanisms of permanently and non-permanently connected driving axles, axle clutches with their engaging devices operating non-permanently connected driving axles, as well as actuators for controlling the operation of mechanisms and systems of the object of application, which are functionally related to the interaction "wheels - road", **characterized in that** in a shaft (1) which is mechanically connected to a permanently connected driving axle (2) at least one unit for formation of relative mobility (3) is integrated, which through its sensitive to torsion loadings elastic elements (4) detaches over the shaft (1) length at least two relatively mobile parts, by means of which an unit for conversion of the relative mobility into physical control actions (5) is formed.

2. **Torsion** control of driving torque distribution, according to claim 1, **characterized in that** the unit for conversion of the relative mobility into physical control actions (5) contains a hollow rotative-shaped component (6) which is attached to one of the relatively mobile part of the unit for formation of relative mobility (3), and is located coaxially to the other one so that cut into the rotative-shaped component (6) cam profiles (7) interact with round ends of stems (8) protruding from a disk (9) which is attached to shaft (1) by a splined joint (10), and by means of a second sliding kinematic unit (11) is also connected to one end of a control lever (12) which is suspended by its middle part on an axis of swing (13) which axis is firmly fixed to the chassis, and the end of the control lever (12) opposite to the disk (9) is connected to actuators used for controlling the operation of mechanisms and systems of the object of application which are functionally related to the interaction "wheels - road".

3. **Torsion** control of driving torque distribution, according to claims 1 and 2, **characterized in that** the control lever (12) is connected by means of a drive line of a clutch (14) with an engaging device (15) of at least one axle clutch (16) of a non-permanently connected driving axle (17), and along the drive line of a clutch (14) a device for dispensing of the physical control actions (18) is installed.

4. **Torsion** control of driving torque distribution, according to claims 1 and 2, **characterized in that** the control lever (12) is connected by means of a drive line of a brake (19) to a control unit (20) of the braking system, and along the drive line of a brake a device for dispensing the braking action (21) is installed.
